# EUROPEAN PATENT SPECIFICATION

(11) **EP 0 737 159 B1**
(45) Date of publication and mention of the grant of the patent: **15.10.1997**
(21) Application number: 95905829.8
(22) Date of filing: 27.12.1994
(51) Int. Cl.: B65G 21/18, B65G 23/44

(54) **BELT-FEEDING DEVICE**
ZUFÜHRVORRICHTUNG FÜR FÖRDERBÄNDER
DISPOSITIF D'ALIMENTATION POUR TRANSPORTEUR A BANDE SANS FIN

(30) Priority: 30.12.1993 SE 9304340
(43) Date of publication of application: 16.10.1996
(73) Proprietor: FRIGOSCANDIA EQUIPMENT AKTIEBOLAG, S-251 09 Helsingborg (SE)
(72) Inventor: HELLSTRÖM, Frank, S-252 50 Helsingborg (SE)
(74) Representative: Berglund, Gustav Arthur
(86) International application number: SE9401253
(87) International publication number: WO9518052

(56) References cited:
- DE-A- 2 511 420
- US-A- 4 189 047
- US-A- 4 196 804
- US-A- 4 201 288
- US-A- 4 941 566

## Description

This invention relates to a device for feeding an endless conveyor belt which, along part of its length, travels in a helical path.

In conveyors of this type, the endless conveyor belt is driven at several points along its path of travel, and it may therefore be desirable that the belt tension at a certain point outside the helical path should have a pre-determined value, for instance the minimum value enabling a stretched belt.

If a desired value of the belt tension is to be contained, it is essential that the belt tension can be measured with sufficient accuracy.

The object of this invention is, therefore, to provide, in a belt conveyor of the above type, a belt-feeding device enabling the belt tension to be accurately determined adjacent to the device, so as to make it possible to set and maintain a desired belt tension.

This object is achieved by a device for feeding an endless conveyor belt, said device comprising a driving pulley engaging the conveyor belt outside the helical path and between two belt-path sections essentially tangent to the driving pulley. The device is characterised in that the driving pulley is rotatably mounted in a holder, which is so mounted in a stationary frame as to be pivotable about an axis extending essentially through the one belt-path section transversely of the longitudinal direction thereof.

Consequently, a sensor for sensing the compressive force can be provided between the holder and the frame, preferably on the same side of the axis as the other belt-path section. The sensor is able to provide an accurate value of the compressive force, since it is only the belt tension that exerts a torque on the holder as long as the above-mentioned position of the pivot axis of the holder is maintained.

With the aid of a suitable control means, the feeding force applied to the driving pulley can be so controlled as a function of the compressive force between the holder and the frame that it falls within a predetermined range, whose lower limit value has to be above zero if the conveyor belt is to be kept stretched adjacent to the feeding device.

One embodiment of the invention will be described in more detail below with reference to the accompanying drawings, in which
Fig. 1 is a perspective view showing an example of different belt-path sections of a conveyor belt;
Fig. 2 is a side view of a feeding device according to the invention;
Fig. 3 is an enlarged view of a detail in Fig. 2; and
Fig. 4 is a top plan view of the feeding device in Fig. 2.

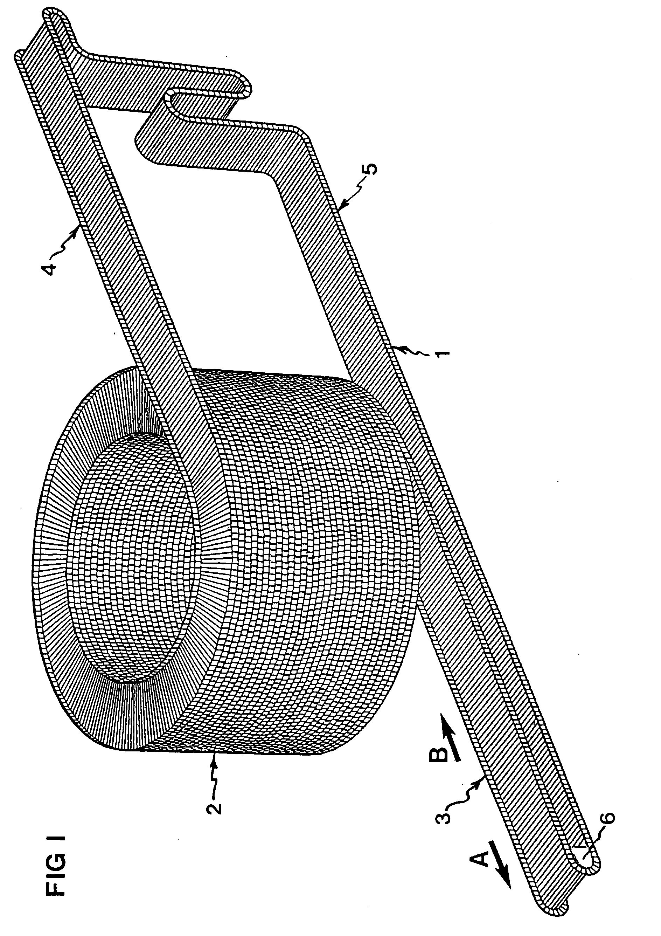

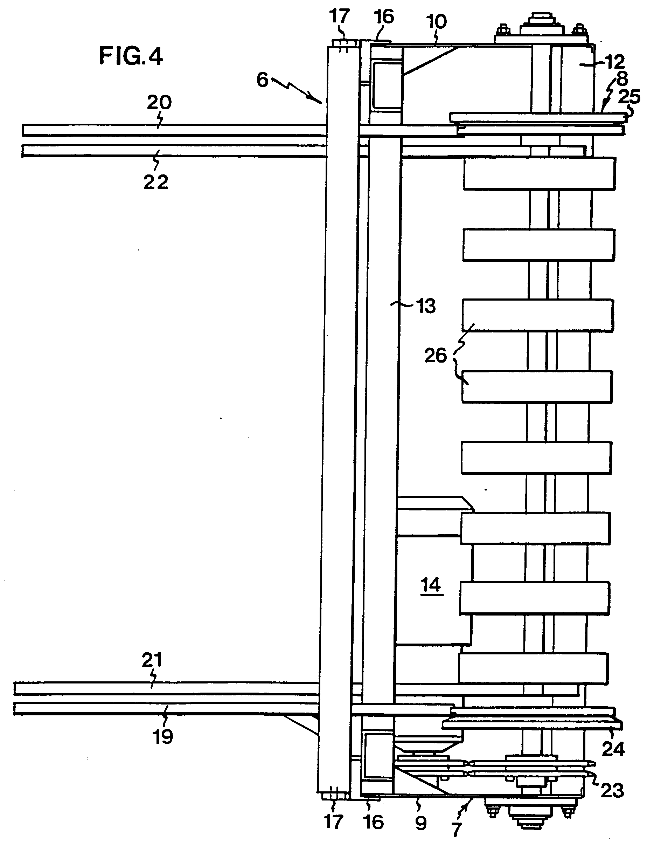

The present invention is intended for a conveyor belt 1 of the design shown in Fig. 1. To be more precise, the conveyor belt 1 shown in Fig. 1 has a helical belt-path section 2, which forms a pile and with which connect two straight belt-path sections 3, 4. Between the latter belt-path sections 3, 4, the belt 1 travels in a return-path section 5.

The conveyor belt 1 can leave the pile 2 via the belt-path section 3, as indicated by an arrow A, or enter the pile 2 via the belt-path section 3, as indicated by an arrow B. In both instances, a feeding device 6 according to the invention may be provided between the belt-path section 3 and the return-path section 5.

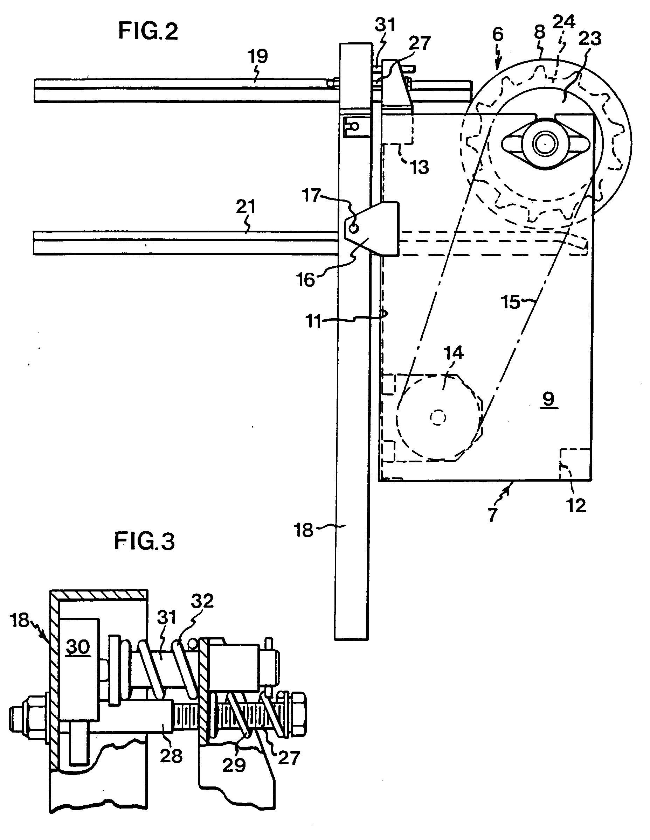

Figs 2-4 illustrate the preferred embodiment of the feeding device 6, which comprises a holder 7 for a driving pulley 8 rotatably mounted therein. The holder 7 includes two lateral plates 9 and 10, which are fixedly interconnected by means of one transverse plate 11 and two transverse support beams 12 and 13.

The holder 7 further supports an electric motor 14 for driving the pulley 8, for instance via a V-belt 15.

The lateral plates 9, 10 are equipped with apertured lugs 16 for mounting of the holder 7, such that it can pivot about a shaft 17 mounted in two posts 18 forming part of a stationary frame.

Moreover, the frame comprises two sliding rails 19, 20 extending essentially tangentially in towards the upper periphery of the driving pulley 8, as well as two sliding rails 21, 22 extending essentially tangentially in towards the lower periphery of the driving pulley 8. The shaft 17 is disposed transversely of the sliding rails 21, 22, such that the conveyor belt 1 cannot, when travelling over the sliding rails 21, 22, transmit any torque to the holder 7 with respect to the shaft 17.

Apart from a V-belt pulley 23 for driving the driving pulley 8 by means of the motor 14, the driving pulley 8 has two sprockets 24, 25 for engaging links at each longitudinal edge of the conveyor belt 1, as well as a plurality of support rollers 26 for supporting the conveyor belt 1 when fed approximately half a turn round the driving pulley 8.

The holder 7 strives to rotate clockwise in Fig. 2 about the shaft 17, but is prevented therefrom by the fact that it is connected to the stationary frame by means of a screw 27, a sleeve 28 and a spring 29, which together determine a maximum as well as a minimum distance between the holder 7 and the frame when the holder 7 is pivoted about the shaft 17.

Adjacent to the screw 27, there is mounted a force sensor 30, for instance a load cell, for sensing the force with which the holder 7 is pressed against the stationary frame as a result of the feeding of the conveyor belt 1 by the driving pulley 8. More specifically, the holder 7 is equipped with a movable pin 31 which, by a spring 32, is pressed against the force sensor 30.

The spring 29 balances the torques of the holder 7 about the shaft 17, and the sleeve 28 limits the force applied to the force sensor 30.

There are two different modes of operation. In the one mode of operation, the pile 2 is so driven by a driving means that the conveyor belt 1 moves in the direction indicated by the arrow A and leaves the pile 2 in the belt-path section 3. In the other mode of operation, the pile 2 is driven in the opposite direction, such that the conveyor belt 1 moves in the direction indicated by the arrow B and enters the pile 2 in the belt-path section 3.

In both cases, it is desirable that the force acting on the belt, and hence the belt tension, is small adjacent to the feeding device 6. According to the invention, this can be achieved by supplying the compressive force, which is exerted between the holder 7 and the frame and sensed by the force sensor 30, in the form of an actual-value signal to a control means (not shown) which, for instance by suitable operation of the motor 14 and, hence, of the driving pulley 8, may cause the actual-value signal to agree with a reference-value signal representing the aimed-at low value of the belt tension.

The invention thus provides a belt-feeding device enabling accurate determination of the belt tension adjacent to the device and, hence, expedient maintenance of a desired belt tension. It goes without saying that several modifications of the feeding device are conceivable within the scope of the invention as defined in the appended claims.

## Claims

1. A device for feeding an endless conveyor belt (1) which, along part of its length, travels in a helical path (2), said device comprising a driving pulley (8) engaging the conveyor belt outside the helical path and between two belt-path sections (3, 5) essentially tangent to the driving pulley, **characterised** in that the driving pulley (8) is rotatably mounted in a holder (7), which is so mounted in a stationary frame as to be pivotable about an axis (17) extending substantially through the one belt-path section (5) transversely of the longitudinal direction thereof.

2. A device as claimed in claim 1, **characterised** in that a sensor (30) for sensing a compressive force between the holder (7) and the frame is provided on the same side of the axis (17) as the other belt-path section (3).

3. A device as claimed in claim 2, **characterised** in that a control means is provided for so controlling the feeding force applied to the driving pulley (8) that the compressive force between the holder (7) and the frame falls within a predetermined range.

4. A device as claimed in claim 3, **characterised** in that the predetermined compressive-force range of the control means has a lower limit value above zero.

5. A device as claimed in any one of claims 1-4, **characterised** in that a spring (29) is provided for balancing the holder (7) about the axis (17).

6. A device as claimed in any one of claims 1-5, **characterised** in that the driving pulley (8) is arranged to rotate in the same direction as the compressive force generated by the driving pulley strives to pivot the holder (7) in relation to the frame.

7. A device as claimed in any one of claims 1-5, **characterised** in that the driving pulley (8) is arranged to rotate in the direction opposite to that in which the compressive force generated by the driving pulley strives to pivot the holder (7) in relation to the frame.

8. A device as claimed in claim 6 or 7, **characterised** in that the conveyor belt (1) is self-supporting along the helical path (2).

## Patentansprüche

1. Vorrichtung zum Transportieren eines Endlosförderbandes (1), das über einen Teil seiner Länge einen spiralförmigen Weg (2) zurücklegt, wobei die Vorrichtung eine Antriebsriemenscheibe (8) umfaßt, die mit dem Förderband außerhalb des spiralförmigen Weges und zwischen zwei Bandwegabschnitten (3, 5) im wesentlichen tangential Zu der Antriebsriemenscheibe in Eingriff ist, **dadurch gekennzeichnet**, daß die Antriebsriemenscheibe (8) drehbar in einem Halter (7) angebracht ist, der so in einem stationären Rahmen angebracht ist, daß er um eine Achse (17) geschwenkt werden kann, die sich im wesentlichen über den einen Bandwegabschnitt (5) quer zur Längsrichtung desselben erstreckt.

2. Vorrichtung nach Anspruch 1, **dadurch gekennzeichnet,** daß ein Sensor (30), der eine Druckkraft zwischen dem Halter (7) und dem Rahmen erfaßt, auf der gleichen Seite der Achse (17) vorhanden ist wie der andere Bandwegabschnitt (3).

3. Vorrichtung nach Anspruch 2, **dadurch gekennzeichnet,** daß eine Steuereinrichtung vorhanden ist, mit der die auf die Antriebsriemenscheibe (8) wirkende Transportkraft so gesteuert wird, daß die Druckkraft zwischen dem Halter (7) und dem Rahmen innerhalb eines vorgegebenen Bereiches liegt.

4. Vorrichtung nach Anspruch 3, **dadurch gekennzeichnet**, daß der vorgegebene Druckkraftbereich der Steuereinrichtung einen unteren Grenzwert über Null hat.

5. Vorrichtung nach einem der Ansprüche 1-4, **dadurch gekennzeichnet**, daß eine Feder (29) vorhanden ist, die den Halter (7) um die Achse (17) herum im Gleichgewicht hält.

6. Vorrichtung nach einem der Ansprüche 1-5, **dadurch gekennzeichnet,** daß sich die Antriebsriemenscheibe (8) in der gleichen Richtung dreht, in der die durch die Antriebsriemenscheibe erzeugte Druckkraft den Halter (7) in bezug auf den Rahmen zu schwenken bestrebt ist.

7. Vorrichtung nach einem der Ansprüche 1-5, **dadurch gekennzeichnet,** daß sich die Antriebsriemenscheibe (8) in der Richtung dreht, die der entgegengesetzt ist, in der die durch die Antriebsriemenscheibe erzeugte Druckkraft den Halter (7) in bezug auf den Rahmen zu schwenken bestrebt ist.

8. Vorrichtung nach Anspruch 6 oder 7, **dadurch gekennzeichnet,** daß das Förderband (1) auf dem spiralförmigen Weg (2) selbsttragend ist.

## Revendications

1. Appareil d'alimentation en courroie transporteuse sans fin (1) qui, sur une partie de sa longueur, se déplace suivant un trajet hélicoïdal (2), l'appareil comprenant une poulie menante (8) qui coopère avec la courroie transporteuse en dehors du trajet hélicoïdal et entre deux tronçons (3, 5) de trajet de courroie qui sont essentiellement tangents à la poulie menante, caractérisé en ce que la poulie menante (8) est montée afin qu'elle puisse tourner dans un organe (7) de maintien qui est lui-même monté dans un châssis fixe afin qu'il puisse pivoter autour d'un axe (17) qui passe pratiquement dans le premier tronçon (5) de trajet de courroie transversalement à sa direction longitudinale.

2. Appareil selon la revendication 1, caractérisé en ce qu'un capteur (30) destiné à détecter une force de compression entre l'organe de maintien (7) et le châssis est placé du même côté de l'axe (17) que l'autre tronçon (3) de trajet de courroie.

3. Appareil selon la revendication 2, caractérisé en ce qu'un dispositif de commande est destiné à régler la force d'alimentation appliquée à la poulie menante (8) de manière que la force de compression entre l'organe de maintien (7) et le châssis tombe dans une plage prédéterminée.

4. Appareil selon la revendication 3, caractérisé en ce que la plage prédéterminée de force de compression du dispositif de commande a une valeur limite inférieure supérieure à zéro.

5. Appareil selon l'une quelconque des revendications 1 à 4, caractérisé en ce qu'un ressort (29) est destiné à équilibrer l'organe de maintien (7) autour de l'axe (17)

6. Appareil selon l'une quelconque des revendications 1 à 5, caractérisé en ce que la poulie menante (8) est disposée afin qu'elle tourne dans le sens dans lequel la force de compression créée par la poulie menante a tendance à faire pivoter l'organe de maintien (7) par rapport au châssis.

7. Appareil selon l'une quelconque des revendications 1 à 5, caractérisé en ce que la poulie menante (8) est destinée à tourner en sens opposé au sens dans lequel la force de compression créée par la poulie menante a tendance à faire pivoter l'organe de maintien (7) par rapport au châssis.

8. Appareil selon la revendication 6 ou 7, caractérisé en ce que la courroie transporteuse (1) est cohérente le long du trajet hélicoïdal (2).
